# EUROPEAN PATENT APPLICATION

(11) **EP 4 447 189 A1**
(43) Date of publication of application: **16.10.2024**
(21) Application number: 23200041.4
(22) Date of filing: 27.09.2023
(51) Int. Cl.: H01M 10/42, H01M 10/48, H01M 10/613, H01M 10/643, H01M 10/6555, H01M 10/6557, H01M 50/503, H01M 50/507, H01M 50/213

(54) **BATTERY PACKS INCLUDING A CELLS CONTACT SYSTEM ASSEMBLY**

(30) Priority: 14.04.2023 CN 202320826732 U
(71) Applicant: Eve Energy Co., Ltd., Huizhou, Guangdong 516006 (CN)
(72) Inventor: REN, Chaoju, Huizhou, Guangdong, 516006 (CN); LU, Jungao, Huizhou, Guangdong, 516006 (CN); ZHANG, Guojiang, Huizhou, Guangdong, 516006 (CN)
(74) Representative: Murgitroyd & Company

(57) **Abstract**

The present disclosure discloses a battery pack including a cells contact system (CCS) assembly. The CCS assembly includes serial-parallel busbars (1), an insulating support (2), and one or more flexible circuit boards. The serial-parallel busbars (1) are configured to electrically connect a plurality of cells to form one or more cell assemblies. The insulating support (2) is connected to the serial-parallel busbars (1). The flexible circuit board includes a first circuit board (31) vertically attached and fixed to an edge of the insulating support (2), so that the first circuit board (31) and the insulating support (2) may be integrally manufactured.

## Description

### TECHNICAL FIELD

The present disclosure belongs to the technical field of batteries, and in particular, to battery packs including a cells contact system (CCS) assembly.

### BACKGROUND

In the power battery industry, a battery pack includes a cylindrical cell, which is mostly cooled by a cooling plate. Generally, in order to improve cooling uniformity of a heat exchange plate to a cylindrical battery, the Chinese Patent Application No. 202111166786.0 provides a cylindrical battery module. The battery module uses a technical solution of liquid cooling on two sides. That is to say, the heat exchange plate is arranged between two adjacent sets of cylindrical cells, and the opposite sides of each of a plurality of cylindrical cells are cooled by a plurality of spaced heat exchange plates. In the above cylindrical cell module, in order to avoid interference to liquid cooling on two sides of each of the cells, it is necessary to overlay an entire FPC board on a serial-parallel busbar after the serial-parallel busbar is installed. The arrangement may cause the following problems.
1. A quantity of materials increases, and difficulty of material control increases.
2. A production process, a welding device, a welding tooling, and the like require need to be increased, thereby increasing a production cost.

Based on the above, a battery pack including a cells contact system (CCS) assembly is urgently required to solve the technical problems existing in the prior art.

### SUMMARY

The present disclosure is intended to provide a battery pack including a cells contact system (CCS) assembly, to improve integration of the CCS assembly and reduce difficulty in material control and production costs while implementing uniform heat exchange of cells in the battery pack.

In order to realize the above objectives, the present disclosure adopts the following technical solutions.

The battery pack including a CCS assembly includes a CCS assembly and a heat exchange structure. The CCS assembly includes:
a plurality of serial-parallel busbars, configured to electrically connect a plurality of cells to form one or more cell assemblies;
an insulating support, connected to the plurality of serial-parallel busbars; and
one or more flexible circuit boards, including a first circuit board electrically connected to the serial-parallel busbars, where the first circuit board is vertically attached and fixed to an edge of the insulating support; and
wherein the heat exchange structure includes a plurality of heat exchange plates arranged parallel to and spaced apart from each other, and the plurality of cells are sandwiched between every two adjacent ones of the heat exchange plates, so that at least one side of one of the heat exchange plates is in thermally conductive contact with the cells.

Optionally, each of the serial-parallel busbars includes a positive connection portion and a negative connection portion arranged insulative from each other.

The insulating support includes a first surface and a second surface arranged opposite to the first surface. A mounting position is arranged on the first surface. Each of the serial-parallel busbars is arranged at the mounting position. The second surface includes a positive through hole and a negative through hole. The positive through hole and the negative through hole are arranged insulative and isolated from each other. A positive electrode of each of the cells is electrically connected to the positive connection portion of one of the serial-parallel busbars through the positive through hole, and a negative electrode of each of the cells is electrically connected to the negative connection portion of another one of the serial-parallel busbars through the negative through hole.

Optionally, the flexible circuit boards further include a second circuit board, and the second circuit board is detachably overlaid on the serial-parallel busbars.

Optionally, one or more glue-injection through holes are provided on the insulating support, and a thermally conductive glue contacts one of the cells through the glue-injection through holes.

Optionally, the CCS assembly further includes one or more serial busbars, the one or more cell assemblies include a plurality of cell assemblies connected in series through the serial busbars.

Optionally, the flexible circuit boards are fixedly connected to the serial-parallel busbars through one or more nickel sheets.

Optionally, the CCS assembly further includes one or more temperature acquisition units electrically connected with one or more of the flexible circuit boards, and each of the temperature acquisition units is configured to detect a temperature of one of the cells.

Optionally, one or more protrusions is arranged on the insulating support in a direction toward an axis of the cell, one or more grooves respectively corresponding to the protrusions are arranged on the serial-parallel busbars, each of the temperature acquisition units is sandwiched between one of the protrusions and a groove bottom of one of the grooves corresponding to the one of the protrusions and is fixedly connected to the one of the protrusions.

Optionally, a connector is arranged on the first circuit board, and the connector is electrically connected to a battery management system through a sampling line.

Optionally, the CCS assembly further includes one or more reinforcing plates fixed to one or more of the flexible circuit boards.

Optionally, the CCS assembly further includes a lower tray, where an accommodating groove is provided on the lower tray, and the cell assembly is mounted in the accommodating groove.

Optionally, each of the heat exchange plates is of a wavy structure.

Beneficial effects are as follows: In the battery packs provided by the present disclosure, due to the plurality of heat exchange plates parallel to each other and spaced apart and the plurality of cells sandwiched between every two adjacent heat exchange plates, at least one side of one of the heat exchange plates is in thermally conductive contact with the cells. Therefore, it is ensured that a heat exchange plate is arranged on opposite sides of each cell, which improves heat exchange uniformity of the cells. In addition, the first circuit board of the flexible circuit board is vertically attached and fixed to an edge of the insulating support, so that the first circuit board and the insulating support may be integrally manufactured into an integrated structure. In this way, materials for the first circuit board and the serial-parallel busbars are no longer separately fed, thereby improving an integration degree of the CCS assembly to a certain extent, reducing a quantity of materials that are separately fed, and effectively reducing difficulty of material control and manufacturing costs.

### BRIEF DESCRIPTION OF THE DRAWINGS

FIG. 1 is an exploded view of a battery pack including a cells contact system (CCS) assembly according to the present disclosure.
FIG. 2 is a bottom view of a CCS assembly according to the present disclosure.
FIG. 3 is a schematic diagram of a three-dimensional structure of a battery pack including a CCS assembly according to the present disclosure.
FIG. 4 is a partial enlarged view of part A in FIG. 3.

### List of reference signs:

100, cell; 200, heat exchange structure; 210, heat exchange plate; 220, heat exchange pipe; 300, lower tray; 310, accommodating groove;
1, serial-parallel busbar; 11, positive connection portion; 12, negative connection portion; 2, insulating support; 21, positive through hole; 22, negative through hole; 23, glue-injection through hole; 24, protrusion; 31, first circuit board; 32, second circuit board; 33, connector; 34, reinforcing plate; 4, temperature acquisition unit; 5, nickel sheet; 6, serial busbar; 71, positive output busbar; 72, negative output busbar.

### DETAILED DESCRIPTION OF THE PREFERRED EMBODIMENTS

In the description of the present disclosure, it should be noted that terms "center", "up", "down", "left", "right", "vertical", "horizontal", "inside", and "outside" indicate orientations or position relationships based on the accompanying drawings, which is only for the convenience of describing the present disclosure and simplifying the description, and does not indicate or imply that indicated devices or elements should have particular orientations or be constructed and operated in particular orientations, and cannot be construed as a limitation on the present disclosure. In addition, terms "first" and "second" are only used to describe the objective and cannot be understood as indicating or implying relative importance. Terms "first position" and "second position" are two different positions.

In the description of the present disclosure, it should be noted that unless otherwise explicitly specified and limited, the terms "mount", "connect", and "fasten" should be understood in a broad sense. For example, a connection may be a fixed connection, or a detachable connection; may be a mechanical connection or an electrical connection; or may be a direct connection, an indirect connection through a medium, or interior communication between two elements. A person of ordinary skill in the art may understand specific meanings of the terms in the present disclosure based on specific situations.

The following clearly and completely describes the technical solutions of the present disclosure with reference to the accompanying drawings. Apparently, the described embodiments are some of embodiments of the present disclosure rather than all the embodiments. All other embodiments obtained by a person of ordinary skill in the art based on the embodiments of the present disclosure without creative efforts shall fall within the protection scope of the present disclosure.

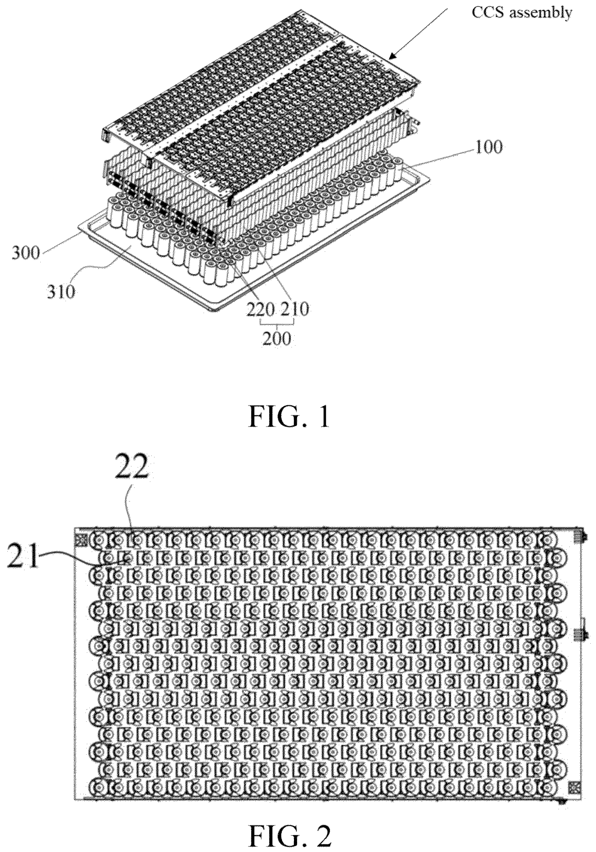

Referring to FIG. 1 to FIG. 4, the present disclosure provides a battery pack. The battery pack includes a cells contact system (CCS) assembly and a heat exchange structure 200. The CCS assembly includes a plurality of serial-parallel busbars 1, an insulating support 2, and a flexible circuit board. The plurality of serial-parallel busbars 1 are configured to electrically connect a plurality of cells 100 to form one or more cell assemblies. The insulating support 2 (a plastic bracket) is connected to the plurality of serial-parallel busbars 1. The flexible circuit board includes a first circuit board 31 electrically connected to the serial-parallel busbars 1. The first circuit board 31 is vertically attached and fixed to an edge of the insulating support 2. The heat exchange structure 200 includes a plurality of heat exchange plates 210 arranged parallel to and spaced apart from each other, and the plurality of cells 100 are sandwiched between every two adjacent heat exchange plates 210, so that at least one side of one heat exchange plate 210 is in thermally conductive contact with the cells 100. In some embodiments, the heat exchange plate 210 is a liquid cooling plate to meet a cooling demand for the cells 100.

In the battery pack, due to the plurality of heat exchange plates 210 parallel to and spaced apart from each other and the plurality of cells 100 sandwiched between every two adjacent heat exchange plates 210, at least one side of one of the heat exchange plates 210 is in thermally conductive contact with the cells 100. In this way, it may be ensured that one heat exchange plate 210 for heat exchange is arranged on each of two opposite sides of each cell 100, which improves heat exchange uniformity of the cell 100. In addition, in a process of manufacturing the CCS assembly, the first circuit board 31 in the flexible circuit board is vertically attached to and fixed to the edge of the insulating support 2 by means of hot riveting or adhesive backing, and then the serial-parallel busbar 1 is connected to the insulating support 2. In this way, the first circuit board 31, the insulating support 2, and the serial-parallel busbars 1 may be integrally manufactured into an integrated structure. When the CCS assembly is subsequently mounted to the cell assemblies, the first circuit board 31 may be avoided from being separately fed, thereby improving integration of the CCS assembly, reducing a quantity of materials that are separately fed, and reducing difficulty in material control and manufacturing costs.

It should be noted that, in some embodiments, a cross section of the insulating support 2 is a square, to meet an external design requirement of the insulating support 2 under an actual operating condition.

Optionally, when the one or more cell assemblies include only one cell assembly, one first circuit board 31 is arranged. The one first circuit board 31 is arranged on a side surface of the insulating support 2. When the one or more cell assemblies include two cell assemblies, two first circuit boards 31 are arranged. The two first circuit boards 31 are arranged on opposite sides of the insulating support 2, which allows the first circuit boards 31 to be fixedly connected to the insulating support 2. When the one or more cell assemblies include more than two cell assemblies, for example, three cell assemblies, the flexible circuit board includes not only two first circuit boards 31, but also a second circuit board 32. However, the second circuit board 32 needs to be detachably overlaid on the serial-parallel busbars 1, and thus the three circuit boards are mounted. Similarly, when the one or more cell assemblies include more than three cell assemblies, other circuit boards than the two first circuit boards 31 are second circuit boards 32 overlaid on a surface of the serial-parallel busbars 1. It may be learned that, in some embodiments, when a number of cell assemblies is N (N > 1), the first circuit board(s) 31 is integrally integrated on the insulating support 2, which can effectively reduce the quantity of materials for the battery pack to be fed separately, and reduce difficulty in material control and production costs. Therefore, the present disclosure does not limit the number of cell assemblies.

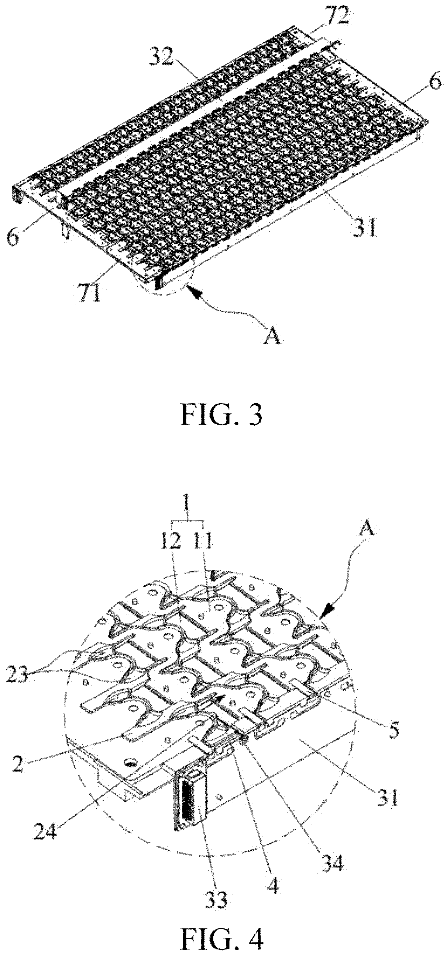

In some embodiments, in conjunction with FIG. 2 and FIG. 3, a single serial-parallel busbar 1 includes a positive connection portion 11 and a negative connection portion 12 arranged insulative from each other. The insulating support 2 includes a first surface and a second surface arranged opposite to the first surface. A mounting position is arranged on the first surface. The serial-parallel busbar 1 is arranged at the mounting position. The second surface includes a positive through hole 21 and a negative through hole 22. The positive through hole 21 and the negative through hole 22 are arranged insulative and isolated from each other. A positive electrode of each of the cells 100 is electrically connected to the positive connection portion 11 of one of the serial-parallel busbars 1 through the positive through hole 21. A negative electrode of each of the cell 100 is electrically connected to the negative connection portion 12 of another one of the serial-parallel busbars 1 through the negative through hole 22. As a result, two of the cells 100 arranged in series may be electrically connected by the serial-parallel busbars 1. It should be noted that to improve an energy density of the battery pack, two adjacent ones of the cells 100 arranged in parallel are staggered, so that a space utilization rate and a mass energy density inside the battery pack may be improved.

Accordingly, in some embodiments, each of the heat exchange plates 210 is of a wavy structure. A cell 100 is arranged in a trough of the wavy structure, so that a trough surface of the heat exchange plate 210 may be tightly fitted with the cell 100, and a cooling area between the heat exchange plate 210 and the cell 100 are increased. Besides, when a coolant flows in the heat exchange plates 210 of the wavy structure, a flow rate can be effectively increased, thereby helping to improve the cooling rate of the cells 100.

In some embodiments, still referring to FIG. 4, one or more glue-injection through holes 23 are provided on the insulating support 2, and a thermally conductive glue contacts a cell 100 through the glue-injection through holes 23. As a result, the heat on the cell 100 may be transferred to the thermally conductive glue, which may reduce a temperature of the cell 100 to a certain extent and avoid thermal runaway caused by an excessive temperature of the cell 100.

Further, in some embodiments, each of the glue-injection through holes 23 is provided between the positive through hole 21 and the negative through hole 22, so that the thermally conductive glue may conduct heat of and cool the positive electrode and the negative electrode of the cell 100. In addition, two symmetrical glue-injection through holes 23 are provided on the insulating support 2 in an axis direction of one of the serial-parallel busbars 1, thereby further improving an effect of heat dissipation of the cells 100, and effectively prolonging a service life of each of the cells 100 in the battery pack. Further, each glue-inj ection through hole 23 has a same cross-sectional area, so that each cell 100 may have a same heat dissipation capacity, thereby ensuring a temperature uniformity in the entire battery pack, and avoiding an excessive temperature of an inner part of the cells 100 of the battery pack.

Optionally, the CCS assembly further includes one or more temperature acquisition units 4 electrically connected with the flexible circuit boards. Each of the temperature acquisition units 4 is configured to detect a temperature of the cell 100, to collect temperature information of the cell 100. In some embodiments, a temperature acquisition unit 4 is a Negative Temperature Coefficient (NTC) thermistor, which has advantages such as a small size, a high sensitivity, a low price and cost, and a fast response speed. The temperature of the cell 100 may be quickly obtained and collected, and an operation condition of the cell 100 may be detected and fed back in time.

Further, to realize accurate collection of temperature, in some embodiments, one or more protrusions 24 are arranged on the insulating support 2 in a direction (as shown by a solid-line arrow in FIG. 3) toward an axis of the cell 100. One or more grooves (not shown in the figure) respectively corresponding to the protrusions 24 are arranged on a serial-parallel busbars 1. Each of the temperature acquisition units 4 is sandwiched between one of the protrusions 24 and a groove bottom of one of the grooves corresponding to the one of the protrusions 24, and is fixedly connected to the one of the protrusions 24. Since the cell 100 is cooled by liquid cooling on two sides thereof, a highest temperature point of the cell 100 is a middle position (that is, a position at the top of the cell 100 on a central axis of the cell 100) of the cell 100. The protrusions 24 may make the temperature acquisition unit 4 closer to the middle position of the cell 100, and the temperature acquisition unit 4 may accurately collect a temperature of the cell 100. In addition, the grooves arranged on the serial-parallel busbars 1 facilitate fixing and mounting of the temperature acquisition unit 4. The temperature acquisition unit 4 is fixedly arranged on the protrusion 24, which may further improve integration of the CCS assembly, while realizing accurate acquisition of the temperature of the cell 100.

Further, in some embodiments, a groove of the grooves is provided from an edge of the negative connection portion 12 in an inward recessed manner in the axial direction of the serial-parallel busbar 1. Generally, the negative electrode of the cell 100 has a higher temperature than that of the positive electrode. Therefore, it is first necessary to ensure that a temperature of the negative electrode of the cell 100 is in a normal operating temperature range. By arranging the temperature acquisition unit 4 at a position closer to the negative electrode of the cell 100, the temperature of the negative electrode of the cell 100 may be effectively and accurately collected, thereby ensuring operating stability of the cell 100.

To collect pressure information of the cell 100 in the battery pack, in some embodiments, the first circuit board 31 and the second circuit board 32 are all fixedly connected to the serial-parallel busbars 1 through one or more nickel sheets 5. In this way, a part of wires on the flexible circuit boards are connected to the serial-parallel busbars 1 through the nickel sheets 5 to collect voltages, and another part of the wires are connected to the temperature acquisition units 4 to collect the temperatures. It should be noted that, in some embodiments, the first circuit board 31 is vertically arranged on the edge of the insulating support 2. Therefore, a nickel sheet 5 connected to the serial-parallel busbar 1 of the first circuit board 31 requires to be of an L-shaped structure, so that a side of the nickel sheet 5 is connected to the serial-parallel busbar 1, and another side is connected to a surface of the first circuit board 31. The second circuit board 32 is overlaid on the serial-parallel busbars 1, so a linear nickel sheet may connect the second circuit board 32 to the serial-parallel busbars 1.

Still referring to FIG. 3, a connector 33 is arranged on each of the first circuit board 31 and the second circuit board 32. The connector 33 is electrically connected to a sampling interface on a battery management system through a sampling line, so that temperature information and voltage information of the cells 100 collected by the first circuit board 31 and the second circuit board 32 may be transmitted to the battery management system. In some embodiments, the connector 33 on each of the first circuit board 31 and the second circuit board 32 is fixed on the insulating support 2 by means of hot riveting, which not only fixes the connector 33 reliably, simplifies a structure, but also reduces the manufacturing cost, and is conducive to an industrial and rapid production.

Optionally, each of the first circuit board 31 and the second circuit board 32 is fixedly provided with a reinforcing plate 34. The reinforcing plate 34 is beneficial to solve problems of poor flexibility of the first circuit board 31 and the second circuit board 32, improve a structural strength of the two circuit boards, and facilitates assembly of the entire CCS assembly. In some embodiments, the reinforcing plate 34 may be selected from an aluminum foil reinforcing plate, a polyester reinforcing plate, a polytetrafluoroethylene reinforcing plate, and the like. A person skilled in the art can choose according to an actual operating condition.

Referring to FIG. 3, in some embodiments, the CCS assembly further includes one or more serial busbars 6. The one or more cell assemblies include a plurality of cell assemblies connected in series through the serial busbars 6. After the plurality of cell assemblies are connected in series, one or more output busbars are formed at two ends thereof. That is to say, a positive output busbar 71 is arranged at the positive electrode, and a negative output busbar 72 is arranged at the negative electrode. An overcurrent requirement of the plurality of cell assemblies in the battery pack can be met by arranging the above positive output busbar 71 and the negative output busbar 72.

Optionally, the battery pack further includes a lower tray 300. An accommodating groove 310 is provided on the lower tray 300. When mounting a plurality of battery modules, the lower tray 300 with the accommodating groove 310 of a proper cross-sectional area may be selected, so that a plurality of battery modules may be limited and arranged in the accommodating groove 310, which fixes the plurality of battery modules and is beneficial to improve an assembly efficiency of the battery pack.

As shown in FIG. 1, the heat exchange structure 200 further includes two heat exchange pipes 220 connecting the plurality of heat exchange plates 210. One of the heat exchange pipes 220 is connected to a liquid outlet of a liquid supply device, and an other one of the heat exchange pipes 220 is connected to a liquid inlet of the liquid supply device. When the cells 100 is cooled by the heat exchange structure 200, coolant in the liquid supply device is first transported to a receiving cavity of each heat exchange plate 210 through the one of the heat exchange pipes 220. After the coolant in the receiving cavity completes heat exchange with the cells 100, the coolant completing the heat exchange is fed back into the liquid supply device through the other one of the heat exchange pipes 220, thereby completing a circulating flow of the coolant in the heat exchange structure 200.

Obviously, the embodiments of the present disclosure are only for the purpose of clearly illustrating the examples made by the present disclosure, and are not intended to limit implementations of the present disclosure. For one of ordinary skill in the art, other changes or alterations in different forms can also be made based on the above description. All implementations are not required and cannot be exhaustive here. Any modification, equivalent replacement, or improvement made and the like within the spirit and principle of the present disclosure shall fall within the protection scope of the claims of the present disclosure.

## Claims

1. A battery pack, comprising a cells contact system assembly and a heat exchange structure (200), wherein the cells contact system assembly comprises:
a plurality of serial-parallel busbars (1), configured to electrically connect a plurality of cells (100) to form one or more cell assemblies;
an insulating support (2), connected to the plurality of serial-parallel busbars (1); and
one or more flexible circuit boards, comprising a first circuit board (31) electrically connected to the serial-parallel busbars (1), wherein the first circuit board (31) is vertically attached and fixed to an edge of the insulating support (2); and
wherein the heat exchange structure (200) comprises a plurality of heat exchange plates (210) arranged parallel to and spaced apart from each other, and the plurality of cells (100) are sandwiched between every two adjacent ones of the heat exchange plates (210), so that at least one side of one of the heat exchange plates (210) is in thermally conductive contact with the cells (100).

2. The battery pack as claimed in claim 1, wherein:
each of the serial-parallel busbars (1) comprises a positive connection portion (11) and a negative connection portion (12) arranged insulative from each other; and
the insulating support (2) comprises a first surface and a second surface arranged opposite to the first surface, a mounting position is arranged on the first surface, each of the serial-parallel busbars (1) is arranged at the mounting position, the second surface comprises a positive through hole (21) and a negative through hole (22), the positive through hole (21) and the negative through hole (22) are arranged insulative and isolated from each other, a positive electrode of each of the cells (100) is electrically connected to a positive connection portion (11) of one of the serial-parallel busbars (1) through the positive through hole (21), and a negative electrode of each of the cell (100) is electrically connected to a negative connection portion (12) of another one of the serial-parallel busbars (1) through the negative through hole (22).

3. The battery pack as claimed in claim 1, wherein the flexible circuit boards further comprise a second circuit board (32), and the second circuit board (32) is detachably overlaid on the serial-parallel busbars (1).

4. The battery pack as claimed in claim 1, wherein one or more glue-injection through holes (23) are provided on the insulating support (2), and a thermally conductive glue contacts one of the cells (100) through the glue-injection through holes (23).

5. The battery pack as claimed in claim 1, wherein the cells contact system assembly further comprises one or more serial busbars (6), the one or more cell assemblies comprise a plurality of cell assemblies connected in series through the serial busbars (6).

6. The battery pack as claimed in claim 1, wherein the flexible circuit boards are fixedly connected to the serial-parallel busbars (1) through one or more nickel sheets (5).

7. The battery pack as claimed in claim 1, wherein the cells contact system assembly further comprises one or more temperature acquisition units (4) electrically connected with one or more of the flexible circuit boards, and each of the temperature acquisition units (4) are configured to detect a temperature of one of the cells (100).

8. The battery pack as claimed in claim 7, wherein one or more protrusions (24) are arranged on the insulating support (2) in a direction toward an axis of the cell (100), one or more grooves respectively corresponding to the protrusions (24) are arranged on the serial-parallel busbars (1), each of the temperature acquisition units (4) is sandwiched between one of the protrusions (24) and a groove bottom of one of the grooves corresponding to the one of the protrusions (24) and is fixedly connected to the one of the protrusions (24).

9. The battery pack as claimed in claim 1, wherein a connector (33) is arranged on the first circuit board (31), and the connector (33) is electrically connected to a battery management system through a sampling line.

10. The battery pack as claimed in claim 1, wherein the cells contact system assembly further comprises one or more reinforcing plates (34) fixed to one or more of the flexible circuit boards.

11. The battery pack as claimed in claim 1, further comprising a lower tray (300), wherein an accommodating groove (310) is provided on the lower tray (300), and the cell assembly is mounted in the accommodating groove (310).

12. The battery pack as claimed in claim 1, wherein each of the heat exchange plates (210) is of a wavy structure.
